(19) Europäisches Patentamt
European Patent Office
Office européen des brevets

(11) **EP 4 155 987 B1**

(12) **FASCICULE DE BREVET EUROPEEN**

(45) Date de publication et mention
de la délivrance du brevet:
**20.11.2024 Bulletin 2024/47**

(21) Numéro de dépôt: **22196428.1**

(22) Date de dépôt: **19.09.2022**

(51) Classification Internationale des Brevets (IPC):
*G06F 21/32* (2013.01)    *G06N 3/02* (2006.01)
*G06V 10/40* (2022.01)    *G06V 10/98* (2022.01)
*G06V 40/10* (2022.01)    *G06V 40/16* (2022.01)
*H04L 9/40* (2022.01)    *H04W 12/06* (2021.01)
*G06V 40/50* (2022.01)    *G06V 10/82* (2022.01)
*G06F 18/2413* (2023.01)

(52) Classification Coopérative des Brevets (CPC):
**G06F 21/32; G06F 18/2414; G06N 3/02;
G06V 10/40; G06V 10/82; G06V 10/993;
G06V 40/10; G06V 40/15; G06V 40/16;
H04L 63/0861; H04W 12/06;** G06F 18/00;
G06V 40/40; G06V 40/50

(54) **PROCÉDÉ DE MODIFICATION D'UNE IMAGE CONTENANT DES DONNÉES BIOMÉTRIQUES ET DISPOSITIF ASSOCIÉ**

VERFAHREN ZUM MODIFIZIEREN EINES BILDES, DAS BIOMETRISCHE DATEN ENTHÄLT, UND VORRICHTUNG DAFÜR

METHOD FOR MODIFYING AN IMAGE CONTAINING BIOMETRIC DATA AND ASSOCIATED DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.09.2021 FR 2110146**

(43) Date de publication de la demande:
**29.03.2023 Bulletin 2023/13**

(73) Titulaire: **Idemia Identity & Security France
92400 Courbevoie (FR)**

(72) Inventeur: **GENTRIC, Stéphane
92400 Courbevoie (FR)**

(74) Mandataire: **Idemia
2, place Samuel de Champlain
92400 Courbevoie (FR)**

(56) Documents cités:
KR-A- 20160 064 138    US-A1- 2005 100 200
US-A1- 2014 283 113

## Description

### DOMAINE DE L'INVENTION

La présente invention se rapporte au domaine de la biométrie.

La présente invention concerne tout particulièrement un procédé comprenant de génération d'une image augmentée à partir d'une pluralité d'images d'un individu.

### ETAT DE LA TECHNIQUE

Un système d'authentification biométrique connu comprend deux dispositifs : un premier dispositif comprenant un capteur d'image permettant d'acquérir des images, et un deuxième dispositif produisant un résultat d'authentification, le premier dispositif et le deuxième dispositif communiquant via un réseau de communication.

Un premier procédé mis en oeuvre dans un système de ce type est le suivant : le capteur d'image acquiert une image montrant l'individu. L'image est transmise via le réseau de communication au deuxième dispositif. Le deuxième dispositif produit un gabarit biométrique à partir de l'image transmise. Ce gabarit biométrique peut ensuite être comparé avec des gabarits de référence mémorisés dans une base de données. En cas de correspondance entre le gabarit biométrique calculé et l'un des gabarits de référence, l'individu est considéré comme un utilisateur agréé. Toutefois, ce premier procédé peut aboutir à un résultat erroné si l'image acquise est bruitée, en particulier si l'image est floue ou ne montre pas de façon suffisamment précise une partie discriminante du corps de l'utilisateur.

Pour surmonter ce problème, il a été proposé un deuxième procédé dans lequel le capteur d'image acquiert non pas une seule image mais plusieurs, et les traitements mis en oeuvre au cours du premier procédé sont appliqués à chaque image. Ce deuxième procédé a toutefois plusieurs inconvénients : premièrement, celui de consommer davantage de bande passante que le premier procédé (plusieurs images sont en effet transmises dans le réseau de communication au lieu d'une seule) ; deuxièmement, il requiert une plus grande charge de calcul que le premier procédé.

Les publications US2005/100200A1, US2014/283113A1, KR20160064138A font également partie de l'art antérieur connexe pertinent en matière de traitement d'images dans le contexte de l'authentification biométrique d'individus.

### EXPOSE DE L'INVENTION

Un but de l'invention est de générer des données se rapportant à un individu sur la base desquelles une authentification biométrique peut être réalisée de manière fiable et consommant peu de bande passante lors de leur transmission dans un réseau de communication. L'invention est notamment définie pas les revendications indépendantes , d'autres aspects et modes de réalisations avantageux étant définis par les revendications dépendantes.

Il est à cet effet proposé, selon un premier aspect, un procédé mis en oeuvre par ordinateur, le procédé comprenant :

- Pour chaque image faisant partie d'une pluralité d'images montrant un individu, application à l'image d'un traitement de sorte à produire un gabarit biométrique relatif à l'individu,
- calcul d'un gabarit moyen constituant une moyenne des gabarits biométriques produits,
- modification d'une image choisie dans la pluralité d'images en une image modifiée, la modification étant adaptée pour qu'une erreur entre le gabarit moyen et un autre gabarit biométrique produit par application du traitement à l'image modifiée soit inférieur à une erreur entre le gabarit moyen et le gabarit biométrique ayant été produit par application du traitement à l'image choisie.

D'une part, l'image modifiée condense sur une taille réduite des informations en provenance de plusieurs images montant l'individu, ce qui réduit sa probabilité d'être bruitée. D'autre part, l'application du même traitement à cette image produirait un gabarit biométrique proche du gabarit moyen, constituant de ce fait une base fiable pour une comparaison avec des gabarits de référence.

Le procédé selon le premier aspect peut en outre comprendre les caractéristiques optionnelles suivantes, prises seules ou combinées entre elles lorsque cela est techniquement possible.

De préférence, l'image choisie est telle que le gabarit biométrique produit par application de l'image choisie est le plus proche du gabarit moyen parmi les gabarits biométriques produits.

Nécessairement, l'étape de modification est itérée jusqu'à ce qu'une itération de l'étape de modification a produit une image finale telle qu'une erreur entre le gabarit moyen et un gabarit biométrique produit par application du traitement à l'image finale est inférieur à un seul prédéfini,

Optionellement, l'itération est reproduite jusqu'à ce que le nombre d'itérations de l'étape de modification a atteint un seuil prédéfini.

Nécessairement, l'étape de modification est itérée comme suit

$$I_{k+1} = I_k - \lambda * D_k$$

où :

- $I_k$ est une image à modifier par une itération k de l'étape de modification,

- $I_{k+1}$ est une image modifiée produite par l'itération k,
- $\lambda$ est un paramètre prédéfini,
- $$D_k = \frac{\delta E_k}{\delta I_k}$$
  , où $E_k$ est une erreur entre le gabarit moyen et un gabarit biométrique produit par application du traitement à l'image $I_k$.

De préférence, le traitement est mis en oeuvre par un réseau de neurones convolutif.

De préférence, le procédé comprend une sélection de la pluralité d'images dans une séquence d'images, par exemple issue d'une vidéo de l'individu.

De préférence, la pluralité d'images provient d'images acquises par un unique capteur d'images.

De préférence, la sélection est réalisée sur la base d'un critère de qualité d'image et sur la base d'un critère de localisation temporelle dans la séquence d'images.

De préférence, la sélection comprend :

a) pour chaque image de la séquence d'images, calcul d'une métrique associée indicative d'une qualité de l'image,
b) sélection d'une image de la séquence d'images dont la métrique associée indique la meilleure qualité dans un ensemble d'images de la séquence n'ayant pas encore été sélectionnées,
c) pour au moins une image de la séquence autre que l'image sélectionnée se trouvant dans un voisinage temporel prédéfini de l'image sélectionnée, dégradation de la métrique associée à l'image,
d) répétition des étapes b) et c) jusqu'à ce qu'au moins une des conditions suivantes est satisfaite :

- le nombre de mises en oeuvre de l'étape b) a atteint un seuil prédéfini,
- la métrique de chaque image de la séquence d'images n'ayant pas encore été sélectionnée a franchi un seuil de qualité prédéfini.

De préférence, les étapes du procédé sont mises en oeuvre par un premier dispositif, le procédé comprenant en en outre une étape de transmission, dans un réseau de communication et à destination d'un deuxième dispositif, d'une image finale étant issue de l'image modifiée, le deuxième dispositif étant configuré pour appliquer à l'image finale le traitement, de sorte à produire un gabarit biométrique final relatif à l'individu.

Il est également proposé, selon un deuxième aspect, une mémoire lisible par ordinateur stockant des instructions exécutables par l'ordinateur pour l'exécution des étapes du procédé selon le premier aspect.

Il est également proposé, selon un troisième aspect, un dispositif comprenant un capteur configuré pour acquérir une pluralité d'images montrant un individu, et au moins un processeur configuré pour :

- pour chaque image faisant partie de la pluralité d'images, appliquer à l'image un traitement de sorte à produire un gabarit biométrique relatif à l'individu,
- calculer un gabarit moyen constituant une moyenne de chaque gabarit biométrique produit,
- modifier une image choisie dans la pluralité d'images en une image modifiée, la modification étant adaptée pour qu'une erreur entre le gabarit moyen et un gabarit biométrique produit par application du traitement à l'image modifiée soit inférieur à une erreur entre le gabarit moyen et le gabarit biométrique ayant été produit par application du traitement à l'image choisie.

**DESCRIPTION DES FIGURES**

D'autres caractéristiques, buts et avantages de l'invention ressortiront de la description qui suit, qui est purement illustrative et non limitative, et qui doit être lue en regard des dessins annexés sur lesquels :

La figure 1 illustre de façon schématique un système d'authentification biométrique selon un mode de réalisation de l'invention.

La figure 2 est un organigramme d'étapes d'un premier procédé selon un mode de réalisation de l'invention.

La figure 3 détaille un organigramme détaillant un mode de réalisation d'une des étapes représentées en figure 2.

La figure 4 est un organigramme d'étapes d'un deuxième procédé selon un mode de réalisation de l'invention.

Sur l'ensemble des figures, les éléments similaires portent des références identiques.

**DESCRIPTION DETAILLEE DE L'INVENTION**

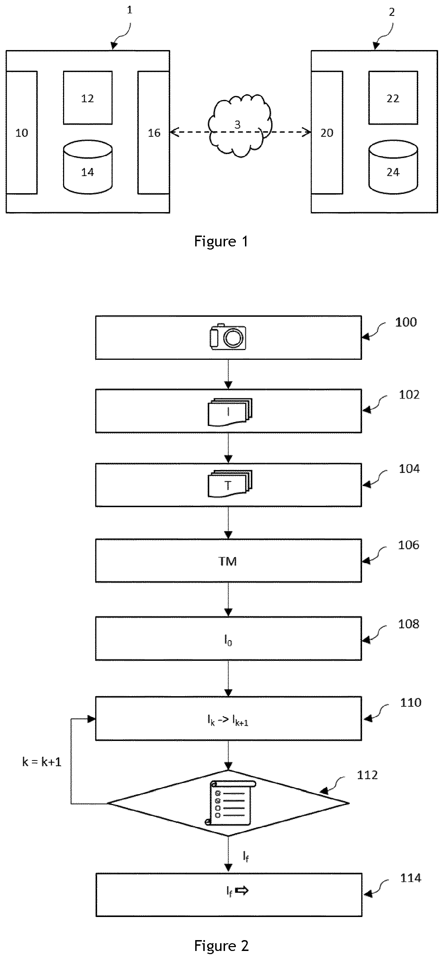

En référence à la **figure 1,** un système d'authentification biométrique comprend un premier dispositif 1 et un deuxième dispositif 2 adapté pour communiquer l'un avec l'autre via un réseau de communication 3.

Le premier dispositif 1 comprend un capteur d'images 10, une unité de traitement 12 de données 12, une mémoire 14 et une interface de communication 16 avec le deuxième dispositif 2.

Le capteur d'images 10 est par exemple adapté pour acquérir une vidéo d'un individu, c'est-à-dire une séquence d'images montrant un individu.

Dans le présent texte, une « image montrant un individu » désigne une image qui montre une partie du corps de cet individu, en particulier une partie du corps de l'individu qui permet de distinguer l'individu d'un autre individu.

Par exemple, les images acquises peuvent montrer le visage de l'individu, on bien au moins une empreinte digitale de doigt de l'individu.

L'unité de traitement 12 de données est configurée pour appliquer certains traitements aux images acquises par le capteur d'images 10.

En particulier, l'unité de traitement 12 est configurée pour mettre en oeuvre un réseau de neurones convolutif prenant en entrée une image I et produisant à partie de cette image d'entrée un gabarit biométrique T (« template » en anglais) relatif à l'individu montré dans l'image d'entrée I. Dans la suite, le traitement appliqué par le réseau de neurones convolutif sera désigné par la fonction mathématique CNN. On a donc :

$$T = CNN(I)$$

L'unité de traitement 12 comprend typiquement au moins un processeur pour mettre en oeuvre les traitements précités, le ou chaque processeur pouvant prendre une forme quelconque (ASIC, FPGA, SoC, microcontrôleur, etc).

Le premier dispositif 1 comprend en outre une mémoire qui mémorise un programme d'ordinateur comprenant des instructions de code exécutable par le ou chaque processeur. Lorsque le programme est exécuté par le ou chaque processeur, un procédé comprenant les traitements précités est mis en oeuvre.

La mémoire comprend typiquement une unité mémoire volatile (RAM par exemple) et une mémoire non volatile (flash, EEPROM, disque dur, SSD, etc.).

L'interface de communication 16 est adaptée pour permettre au premier dispositif 1 de transmettre des données au deuxième dispositif 2 via le réseau de communication 3. Cette interface de communication 16 peut être de tout type (filaire ou radio sans fil), et les communications via ce réseau de communication 3 peuvent être régies par n'importe quel protocole de communication (Ethernet, Wi-Fi, Bluetooth, cellulaire 3G/4G/5G, etc.).

Le premier dispositif 1 est typiquement destiné à être utilisé à l'entrée d'une zone sécurisée, dans laquelle seuls des individus agréés ont le droit de pénétrer. Par exemple, le premier dispositif 1 peut faire partie ou être couplé à un portique constituant une barrière physique empêchant un individu non agréé de pénétrer dans la zone sécurisée, et autorisant un individu agréé à y pénétrer. On verra plus loin que le système est utilisé pour la réalisation une authentification biométrique d'un individu, cette authentification biométrique ayant par exemple pour finalité de déterminer si cet individu est agréé (auquel cas il aura le droit de pénétrer dans la zone sécurisée) ou pas (auquel cas l'accès à la zone sécurisé lui sera interdit).

Selon une variante non représentée, le premier dispositif 1 comprend plusieurs capteurs d'images adaptés pour acquérir une pluralité d'images d'un individu.

Cela permet par exemple de disposer d'images de l'individu prises avec un angle de vue différent. Le deuxième dispositif 2 est distant du premier dispositif 1.

Le deuxième dispositif 2 comprend une interface de communication 20 avec le premier dispositif 1, une unité de traitement 22 et une mémoire 24.

L'interface de communication 20 peut être du même type que l'interface de communication 16 du premier dispositif 1.

L'unité de traitement 22 est en particulier configurée pour mettre en oeuvre le même réseau de neurones convolutif de fonction mathématique CNN que le premier dispositif 1.

La mémoire 24 est destinée à mémoriser une base de données comprenant des gabarits biométriques ou des images biométriques se rapportant à divers individus préalablement enrôlés.

En référence à la figure 2, un procédé mis en oeuvre le premier dispositif 1 comprend les étapes suivantes.

Un individu se présente à proximité du premier dispositif 1. Dans ce qui suit, on considérera un exemple de mise en oeuvre dans lequel un individu souhaitant pénétrer dans une zone sécurisée comme décrit précédemment.

Dans une étape d'acquisition 100, une caméra acquiert par exemple une séquence d'images montrant l'individu.

Typiquement, la séquence d'images comprend un nombre N d'images acquises à une fréquence relativement élevée, avec $N \geq 3$.

La séquence de N images est mémorisée dans la mémoire 14.

Selon une variante, plusieurs capteurs acquièrent des images montrant l'individu. La séquence d'images comprend des images de l'individu prises à différents instants de temps et par différents capteurs. Dans une étape de sélection 102, l'unité de traitement 12 sélectionne dans la séquence d'images une pluralité d'images constituant un sous-ensemble d'images de cette séquence. Autrement dit, la pluralité d'images obtenue à l'issue de cette sélection comprend un nombre d'images K tel que $1 \leq K \leq N$.

La sélection 102 de la pluralité d'images dans la séquence d'images est réalisée par l'unité de traitement 12 sur la base d'un critère de qualité d'image et sur la base d'un critère de localisation temporelle dans la séquence d'images.

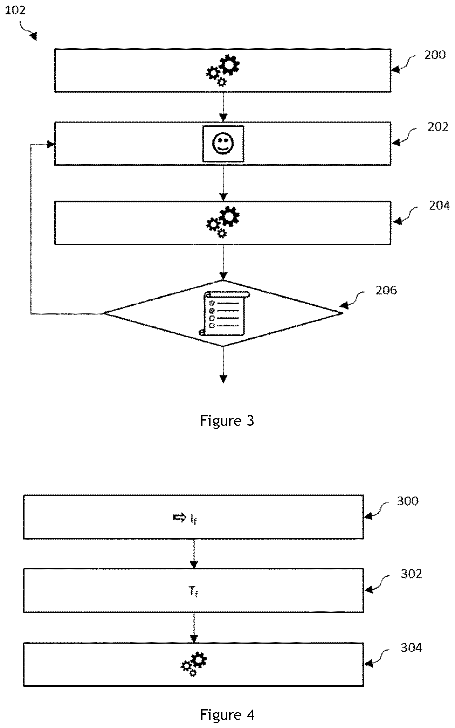

Dans un mode de réalisation représenté en figure 3, la sélection 102 comprend avantageusement les sous-étapes suivantes.

Pour chaque image de la séquence d'images, l'unité de traitement 12 calcule une métrique associée à l'image, la métrique étant indicative d'une qualité de l'image (étape 200). N métriques sont donc calculées dans cette étape 200.

La métrique calculée peut être l'une des métriques suivantes, connues de l'homme du métier :

- Une métrique indicative d'une pose du visage d'un individu montré dans l'image : dans ce cas, la valeur de la métrique dépend de le l'orientation du visage par rapport au capteur d'images 10 ; une image montrant le visage de l'individu de face est considérée de meilleurs qualité qu'une image montrant le visage de l'individu de biais voire même de profil.
- Une métrique indicative de la résolution du visage de l'individu montré dans l'image : plus la distance entre les yeux de l'individu, comptée en nombre de pixels dans l'image, est grand, plus la qualité de cette image est élevée.
- Une métrique indicative d'un niveau de flou de l'image : plus l'image est floue, moins la qualité de l'image est élevée.
- Une métrique « biométrique », produite un réseau de neurones différent du réseau de neurones convolutif discuté plus haut.

Les métriques calculées sont mémorisées dans la mémoire 16 en association avec leurs images respectives.

Ensuite, l'unité de traitement 12 sélectionne l'image de la séquence d'images qui est associée à la métrique indiquant la meilleure qualité dans l'ensemble des images de la séquence n'ayant pas encore été sélectionnées (sous-étape 202). A ce stade, cet ensemble est la séquence d'images elle-même acquise par le capteur d'images 10 dans sa totalité ; autrement dit, l'image sélectionnée lors de cette première mise en oeuvre de la sous-étape 202 est celle qui présente la qualité la plus élevée au sein de la séquence d'images. Cette image sélectionnée lors de cette première mise en oeuvre est appelée par convention « première image ».

L'unité de traitement 12 identifie chaque image de la séquence d'images se trouvant dans un voisinage temporel de l'image sélectionnée à la sous-étape 202 (c'est-à-dire la première image). Une image de la séquence est considérée comme voisine de l'image sélectionnée à la sous-étape 202 si elle se trouve dans un intervalle temporel de durée prédéfinie comprenant l'image sélectionnée, par exemple un intervalle temporel centré sur cette image sélectionnée. Prenons un exemple concret pour illustrer ce principe : si le rayon de cet intervalle temporel est choisi à 500 millisecondes, les images de la séquence en avance ou en retard d'au plus 500 millisecondes par rapport à l'image sélectionnée peuvent être considérées comme les images voisines de l'image sélectionnée.

L'unité de traitement 12 dégrade la métrique associée à au moins une des images voisines (sous-étape 204). Par « dégradation », on veut dire que la valeur de la métrique est modifiée de sorte à diminuer la qualité indiquée par la métrique. Il est entendu que cette dégradation ne concerne que les valeurs de métrique calculées, et non les images auxquelles ces valeurs de métrique se rapportent ; autrement dit, les images ne sont en elles-mêmes pas dégradées.

De préférence, l'unité de traitement 12 dégrade 204 la métrique associée à toute image voisine de l'image auparavant sélectionnée à la sous-étape 202. Toutes les dégradations sont par exemple des décalages selon le même écart de qualité.

Dans une étape 206, l'unité de traitement 12 vérifie si au moins une des conditions de sortie suivantes est satisfaite :

- le nombre de mises en oeuvre des sous-étapes 202 et 204 atteint un seuil prédéfini Kmax,
- la métrique de chaque image de la séquence d'images n'ayant pas encore été sélectionnée indique une qualité inférieure à une seuil de qualité prédéfini.

Si au moins une de ces conditions est satisfaite, l'étape de sélection 102 est terminée.

Sinon, les sous-étapes 202, 204 et 206 sont itérées de la manière suivante.

L'unité de traitement 12 répète la sous-étape 202 consistant à sélectionner une image de la séquence d'images qui est associée à la métrique indiquant la meilleure qualité dans l'ensemble des images de la séquence n'ayant pas encore été sélectionnées.

Une différence par rapport à la précédente mise en oeuvre de cette sous-étape 202 réside dans le fait qu'entre-temps la première image a été sélectionnée ; ainsi, à la seconde mise en oeuvre de la sous-étape 202, l'ensemble des images de la séquence n'ayant pas encore été sélectionnées correspond à la séquence d'images initiale à l'exclusion de la première image. Une deuxième image différente de la première image est donc sélectionnée lors de cette seconde mise en oeuvre de la sous-étape 202.

Une autre différence par rapport à la précédente mise en oeuvre de cette sous-étape réside dans le fait qu'entre temps les métriques respectivement associées à certaines images (au moins une des images voisines de la première image) ont été dégradées. Ceci favorise avantageusement la sélection en tant que deuxième image d'une image qui n'est pas proche temporellement de la première image.

L'unité de traitement 12 répète la sous-étape 204 consistant à dégrader la métrique associée à au moins une des images voisines de l'image sélectionnée en dernier, à savoir la deuxième image. Le même voisinage temporel peut être utilisé.

Ce mode de réalisation de l'étape de sélection 102 a pour avantage de conduire à l'obtention d'une pluralité d'images sélectionnées qui ne sont pas trop proches les unes les autres temporellement, et donc peu redondantes, tout en étant de bonne qualité.

De retour à la figure 2, l'unité de traitement 12 passe chaque image sélectionnée en entrée du réseau de neurone convolutif. Le traitement mis en oeuvre par le réseau de neurones convolutif produit sur la base de chaque image sélectionnée un gabarit biométrique correspondant se rapportant à l'individu montré dans l'image (étape 104). Ainsi, sur la base des K images sélectionnées, sont produits par le réseau de neurones convolutif K gabarits associés à l'étape 104.

Chaque gabarit biométrique se présente typiquement sous la forme d'un vecteur, par exemple de norme 1.

Les gabarits biométriques produits par le réseau de neurones convolutif sont mémorisés dans la mémoire 14.

Dans une étape 106, l'unité de traitement 12 calcule ensuite un gabarit moyen TM constituant, comme son nom l'indique, une moyenne des K gabarits biométriques produits précédemment. Par exemple, le gabarit moyen TM peut être calculée comme la somme de ces K gabarits biométrique divisée par la somme de leurs normes respectives (donc divisée par K en case de vecteurs de norme égale à 1).

Le gabarit moyen TM est mémorisé dans la mémoire 16.

Par la suite, l'unité de traitement 12 choisit une des images faisant partie des K images ayant été sélectionnées, que l'on appelle par convention image initiale $I_0$.

L'image initiale $I_0$ peut être quelconque au sein des K images sélectionnées sur la base desquelles le gabarit TM a été calculé.

Toutefois, dans un mode de réalisation avantageux, il est choisi comme image initiale $I_0$ l'image associée au gabarit biométrique qui est le plus proche du gabarit moyen TM. Pour trouver cette image, il suffit de calculer chaque distance entre le gabarit moyen et un des K gabarits biométriques produits, d'identifier le gabarit biométrique To se trouvant à distance minimale du gabarit moyen parmi les K gabarits biométriques produits, puis d'identifier l'image $I_0$ qui a été passé en entrée du réseau de neurones convolutif de fonction mathématique CNN pour produire le gabarit biométrique $T_0$ se trouvant à cette distance minimale ($T_0 = CNN(I_0)$).

Par la suite, l'unité de traitement 12 met en oeuvre une boucle comprenant un ou plusieurs itérations, cette boucle produisant une image finale $I_f$ à partir de l'image initiale $I_0$.

On va d'abord décrite une itération initiale de cette boucle (par convention d'indice zéro), avant de décrit de façon plus générale une itération d'indice k de cette boucle par rapport à une itération précédente d'indice k-1.

L'itération initiale de la boucle comprend une étape de modification 110 au cours de laquelle l'unité de traitement 12 modifie l'image initiale $I_0$ en une image modifiée $I_1$. La modification 110 mise en oeuvre est adaptée pour satisfaire la condition suivante : une erreur $E_1$ entre le gabarit moyen TM et un gabarit biométrique $T_1$ produit par application du traitement à l'image modifiée $I_1$ est inférieur à une erreur Eo entre le gabarit moyen TM et le gabarit biométrique $T_0$ ayant été produit par application du traitement à l'image initiale $I_0$.

Il est à noter ici que cette étape de modification ne nécessite pas forcément le calcul préalable du gabarit biométrique $T_1$ produit par application du traitement à l'image modifiée $I_1$ ni de l'erreur $E_1$. En revanche, un tel calcul peut être en pratique mis en oeuvre pour vérifier si une modification d'image est couverte par la modification réalisée à l'étape 110.

Même si le gabarit biométrique $T_1$ n'est pas calculé en tant que tel selon une étape du procédé, l'étape de modification 110 garantit la que la condition sur les erreurs E1, E2 est remplie, c'est-à-dire que l'erreur $E_1$ entre le gabarit moyen TM et un gabarit biométrique $T_1$ produit par application du traitement à l'image modifiée $I_1$ est inférieure à l'erreur Eo entre le gabarit moyen TM et le gabarit biométrique $T_0$ ayant été produit par application du traitement à l'image initiale $I_0$.

Dans un mode de réalisation, la modification 110 de l'image $I_0$ en l'image modifiée $I_1$ est réalisée de la manière suivante.

L'unité de traitement 12 calcule le gradient suivant :

$$D_0 = \frac{\delta E_0}{\delta I_0}$$

où Eo est une erreur entre le gabarit moyen et le gabarit biométrique $T_0$ produit par application du traitement CNN à l'image $I_0$ (c'est-à-dire que $T_0 = CNN(Io)$).

L'erreur Eo est par exemple une erreur de la forme suivante :

$$E_0 = (T_0 - TM)^2$$

Ensuite, l'unité de traitement 12 calcule l'image modifiée $I_1$ en appliquant la formule suivante :

$$I_1 = I_0 - \lambda * D_0$$

où $\lambda$ est un paramètre prédéfini.

Ce mode de réalisation de l'étape de modification 110 s'inspire la méthode de descente de gradient, traditionnellement utilisée pour mettre à jour les paramètres d'un réseau de neurones d'une manière de manière à minimiser une perte. Toutefois, dans le présent procédé, ce ne sont pas les paramètres du réseau de neurones convolutif de fonction mathématique CNN que l'on cherche à modifier, mais une image qui a été passé en entrée de ce réseau de neurones convolutif (en l'occurrence l'image $I_0$), ce qui n'est pas conventionnel.

L'itération initiale de la boucle comprend ensuite une étape de vérification 112 au cours de laquelle l'unité de traitement 12 vérifie si une des conditions suivantes de sortie est satisfaite.

Une première condition est satisfaite lorsque l'erreur entre le gabarit moyen TM et le gabarit biométrique $T_1$ produit par application du traitement à l'image $I_1$

est inférieur à un seuil prédéfini E, autrement lorsque :

$$E_1 = (T_1 - TM)^2 < E$$

Ainsi, pour savoir si cette première condition est satisfaite, l'unité de traitement 12 calcule $T_1$ = CNN($I_1$), lorsque ce calcul n'a pas déjà été fait au cours de l'étape de modification de l'image $I_0$ en l'image modifiée $I_1$ (ce calcul n'est en particulier pas fait dans le mode de réalisation décrit ci-dessus s'inspirant de la méthode de la descente de gradient).

Une deuxième condition est satisfaite lorsque le nombre d'itérations de l'étape de modification 110 mis en oeuvre atteint un seuil prédéfini. A ce stade, l'étape de modification n'a été mis en oeuvre qu'une seule fois.

Si la première condition est vérifiée ou si la deuxième condition est vérifiée, alors la boucle se termine. L'image finale $I_f$ est alors l'image modifiée $I_1$.

Sinon, une nouvelle itération de la boucle (d'indice 1) est mise en oeuvre, cette nouvelle itération prenant en entrée l'image $I_1$ en lieu et place de l'image initiale $I_0$.

Considérons de façon plus générale une itération d'indice k de la boucle, avec k≠0. Cette itération d'indice k applique à l'image $I_k$, obtenue lors d'une itération précédente d'indice k-1, la modification de l'étape 110 décrite précédemment, de sorte à obtenir une nouvelle image modifiée $I_{k+1}$.

Dans le mode de réalisation décrit précédemment s'inspirant de la méthode de la descente de gradient, on a ainsi à l'itération d'indice k :

$$I_{k+1} = I_k - \lambda * D_k$$

où :

$$D_k = \frac{\delta E_k}{\delta I_k}$$

$$E_k = (T_k - TM)^2$$

La modification 110 mise en oeuvre à l'itération d'indice k est adaptée pour que l'erreur $E_{k+1}$ entre le gabarit moyen TM et le gabarit biométrique $T_{k+1}$ produit par application du traitement à l'image modifiée $I_{k+1}$ soit inférieur à l'erreur $E_k$ entre le gabarit moyen et le gabarit biométrique ayant été produit par application du traitement à l'image $I_k$.

L'image finale $I_f$ obtenue en sortie de la boucle est l'image modifiée produite lors de la dernière mise en oeuvre de l'étape de modification 110. Comme indiqué précédemment, l'image finale $I_f$ peut parfaitement être l'image $I_1$ (dans le cas où une seule itération de la boucle a suffi pour conduire à la satisfaction de la première condition ou de la seconde condition), ou bien être une image résultat d'une ou plusieurs modifications successives de cette image $I_1$ (dans le cas où plusieurs itérations de la boucle ont dû être exécutées pour satisfaire la première condition ou la seconde condition).

Ultérieurement, l'image finale $I_f$ est transmise au deuxième dispositif 2 via l'interface de communication (étape 114).

L'image finale $I_f$ présente un double avantage : elle constitue une donnée de taille réduite dont la transmission 114 consomme peu de bande passante sur le réseau de communication 3, tout en compilant des informations visuelles provenant des K images sélectionnées dans la séquence vidéo. Cette image finale $I_f$ a moins de chance d'être bruitée qu'une des images d'origine de la séquence d'images acquise.

En référence à la figure 4, le deuxième dispositif 2 met en oeuvre un procédé comprenant les étapes suivantes.

Le deuxième dispositif 2 reçoit l'image finale $I_f$ via son interface de communication (étape 300).

L'unité de traitement 22 du deuxième dispositif 2 passe l'image finale If en entrée du même réseau de neurones convolutif de fonction mathématique CNN que celui mis en oeuvre par le premier dispositif 1 (étape 302). Autrement dit, le traitement mis en oeuvre à l'étape 302 côté deuxième dispositif 2 est identique à chaque traitement mis en oeuvre à l'étape 104 côté premier dispositif 1. A partir de l'image finale $I_f$, le réseau de neurones convolutif produit à l'étape 302 un gabarit biométrique $T_f$ = CNN($I_f$), que l'on appelle par convention gabarit biométrique « final ».

L'unité de traitement 12 peut ensuite comparer le gabarit biométrique final $T_f$ avec les gabarits de référence stockés dans la base de données de la mémoire 24, afin de déterminer si le gabarit biométrique final $T_f$ correspond à l'un d'entre eux (ce traitement de comparaison est connu en anglais sous le terme de « matching »).

- Dans la positive, cela signifie que l'individu a été préalablement enrôlé dans la base de données ; l'individu est donc un utilisateur agréé, et il lui est donné l'autorisation d'accéder à la zone sécurisée (résultat d'authentification positif).
- Dans la négative, cela signifie que l'individu n'est pas un utilisateur agréé ; l'accès à la zone sécurité lui est refusée (résultat d'authentification négatif).

En raison de la manière dont a été produite l'image finale $I_f$, le gabarit biométrique final $T_f$ est proche du gabarit moyen TM. Cette propriété permet au deuxième dispositif 2 de mettre en oeuvre des correspondances qui restent fiables. Ainsi, un double objectif a été atteint : l'authentification biométrique réalisée n'a consommé que peu de bande passante sur le réseau de communication 3 entre le premier dispositif 1 et le deuxième dispositif 2 (une seule image riche en information a été transmise sur ce réseau), et ce sans compromettre le bon fonctionnement de la mise en correspondance de gabarits.

Le procédé mise en oeuvre par le premier dispositif 1 peut également être combiné à un procédé mis en oeuvre par le deuxième dispositif 2 pour enrôler l'individu dans la base de données de la mémoire 24 (auquel cas l'étape de comparaison/mise en correspondance est simplement remplacée par une mémorisation du gabarit final $T_f$ et/ou de l'image finale $I_f$ dans la base de données).

Bien entendu les procédés décrit précédemment en relation avec les figures annexées ne sont que des modes de réalisation, non limitatifs. Ces procédés peuvent faire l'objet de variantes.

Bien qu'avantageuse, l'utilisation d'un réseau de neurones convolutif pour produire des gabarits biométriques à partie d'images n'est pas nécessaire. D'autres traitements peuvent être mis en oeuvre pour produire des gabarits biométriques à partir d'images.

Il est en outre entendu que les étapes d'acquisition 100 et de sélection 102 sont des étapes préliminaires facultatives pour l'obtention de l'image finale $I_f$. La sélection 102 est optionnelle, et la pluralité de K images sur la base desquelles l'image finale est obtenue ne provient pas nécessairement d'une séquence d'images acquise par un capteur d'images 10.

## Revendications

1. Procédé de traitement d'images contenant des données biométriques relatives à un individu mis en oeuvre par ordinateur, le procédé comprenant

     - pour chaque image faisant partie d'une pluralité d'images montrant un individu, application (104) à l'image d'un traitement de sorte à produire un gabarit biométrique relatif à l'individu,
     - calcul (106) d'un gabarit moyen (TM) constituant une moyenne des gabarits biométriques produits,
     - modification (110) d'une image choisie ($I_0$) dans la pluralité d'images en une image modifiée ($I_1$), la modification (110) étant adaptée pour qu'une erreur entre le gabarit moyen (TM) et un autre gabarit biométrique produit par application du traitement à l'image modifiée ($I_1$) soit inférieure à une erreur entre le gabarit moyen (TM) et le gabarit biométrique ayant été produit par application du traitement à l'image choisie ($I_0$) ;

l'étape de modification (110) est itérée comme suit :

$$I_{k+1} = I_k - \lambda . D_k$$

où :

- $I_k$ est une image à modifier par une itération k de l'étape de modification (110),
- $I_{k+1}$ est une image modifiée produite par l'itération k,
- $\lambda$ est un paramètre prédéfini,
- $D_k = \dfrac{\partial E_k}{\partial I_k}$ , où $E_k$ est une erreur entre le gabarit moyen (TM) et un gabarit biométrique produit par application du traitement à l'image $I_k$..

2. Procédé selon la revendication précédente, dans lequel l'image choisie ($I_0$) est l'image associée au gabarit biométrique le plus proche du gabarit moyen (TM).

3. Procédé selon l'une des revendications précédentes, dans lequel l'étape de modification (110) est itérée jusqu'à ce qu'au moins une des conditions suivantes est satisfaite :

     - une itération de l'étape de modification (110) a produit une image finale ($I_f$) telle qu'une erreur entre le gabarit moyen (TM) et un gabarit biométrique produit par application du traitement à l'image finale ($I_f$) est inférieure à un seul prédéfini,
     - le nombre d'itérations de l'étape de modification (110) a atteint un seuil prédéfini.

4. Procédé selon l'une des revendications précédentes, dans lequel le traitement est mis en oeuvre par un réseau de neurones convolutif.

5. Procédé selon l'une des revendications précédentes, comprenant en outre :

     - une sélection (102) de la pluralité d'images dans une séquence d'images, la sélection étant réalisée sur la base d'un critère de qualité d'image et sur la base d'un critère de localisation temporelle dans la séquence d'images, l'étape de sélection (102) comprend :

         a) pour chaque image de la séquence d'images, calcul (200) d'une métrique associée indicative d'une qualité de l'image,
         b) sélection (202) d'une image de la séquence d'images dont la métrique associée indique la meilleure qualité dans un ensemble d'images de la séquence n'ayant pas encore été sélectionnées,
         c) pour au moins une image de la séquence autre que l'image sélectionnée se trouvant dans un voisinage temporel prédéfini de l'image sélectionnée, dégradation (204) de la métrique associée à l'image,
         d) répétition des étapes b) et c) jusqu'à ce qu'au moins une des conditions suivantes est satisfaite :

- le nombre de mises en oeuvre de l'étape b) a atteint un seuil prédéfini,
- la métrique de chaque image de la séquence d'images n'ayant pas encore été sélectionnée a franchi un seuil de qualité prédéfini..

6. Procédé selon l'une des revendications précédentes, dont les étapes sont mises en oeuvre par un premier dispositif (1), le procédé comprenant en en outre une étape de - transmission (114), dans un réseau de communication (3) et à destination d'un deuxième dispositif (2), d'une image finale ($I_f$) étant issue de l'image modifiée, le deuxième dispositif (2) étant configuré pour appliquer à l'image finale le traitement, de sorte à produire un gabarit biométrique final ($T_f$) relatif à l'individu.

7. Mémoire (14) lisible par ordinateur stockant des instructions exécutables par l'ordinateur pour l'exécution des étapes du procédé selon l'une quelconque des revendications 1 à 6.

8. Dispositif (1) comprenant un capteur (10) configuré pour acquérir une pluralité d'images montrant un individu, et au moins un processeur (12) configuré pour exécuter les étapes d'un procédé selon l'une quelconque des revendication 1 à 6.

**Patentansprüche**

1. Verfahren zur Verarbeitung von eine Person betreffende biometrische Daten enthaltenden Bildern, das von einem Computer durchgeführt wird, wobei das Verfahren enthält

- für jedes Bild, das Teil einer Vielzahl von eine Person zeigenden Bildern ist, Anwendung (104) einer Verarbeitung an das Bild, um ein die Person betreffendes biometrisches Template zu erzeugen,
- Berechnung (106) eines mittleren Templates (TM), das einen Mittelwert der erzeugten biometrischen Templates bildet,
- Änderung (110) eines in der Vielzahl von Bildern gewählten Bilds ($I_0$) in ein geändertes Bild ($I_1$), wobei die Änderung (110) geeignet ist, damit ein Fehler zwischen dem mittleren Template (TM) und einem anderen biometrischen Template, das durch Anwendung der Verarbeitung an das geänderte Bild ($I_1$) erzeugt wird, geringer ist als ein Fehler zwischen dem mittleren Template (TM) und dem biometrischen Template, das durch Anwendung der Verarbeitung an das gewählte Bild ($I_0$) erzeugt wurde;

der Änderungsschritt (110) wird folgendermaßen wiederholt:

$$I_{k+1} = I_k - \lambda . D_k$$

wobei:

- $I_k$ ein durch eine Iteration k des Änderungsschritts (110) zu änderndes Bild ist,
- $I_{k+1}$ ein durch die Iteration k erzeugtes geändertes Bild ist,
- A ein vordefinierter Parameter ist,
- $D_k = \frac{\partial E_k}{\partial I_k}$ , wobei $E_k$ ein Fehler zwischen dem mittleren Template (TM) und einem biometrischen Template ist, das durch Anwendung der Verarbeitung an das Bild $I_k$ erzeugt wird.

2. Verfahren nach dem vorhergehenden Anspruch, wobei das gewählte Bild ($I_0$) das Bild ist, das dem dem mittleren Template (TM) am nächsten liegenden biometrischen Template zugeordnet ist.

3. Verfahren nach einem der vorhergehenden Ansprüche, wobei der Änderungsschritt (110) wiederholt wird, bis mindestens eine der folgenden Bedingungen erfüllt ist:

- eine Iteration des Änderungsschritts (110) hat ein endgültiges Bild ($I_f$) derart erzeugt, dass ein Fehler zwischen dem mittleren Template (TM) und einem durch Anwendung der Verarbeitung an das endgültige Bild ($I_f$) erzeugten biometrischen Template geringer ist als eine vordefinierte Schwelle,
- die Anzahl von Iterationen des Änderungsschritts (110) hat eine vordefinierte Schwelle erreicht.

4. Verfahren nach einem der vorhergehenden Ansprüche, wobei die Verarbeitung von einem gefalteten neuronalen Netzwerk durchgeführt wird.

5. Verfahren nach einem der vorhergehenden Ansprüche, das außerdem enthält:

- eine Auswahl (102) der Vielzahl von Bildern in einer Folge von Bildern, wobei die Auswahl auf der Basis eines Bildqualitätskriteriums und auf der Basis eines zeitlichen Lokalisierungskriteriums in der Folge von Bildern durchgeführt wird,

der Auswahlschritt (102) enthält:

a) für jedes Bild der Folge von Bildern, Berechnung (200) einer zugeordneten Metrik, die eine Qualität des Bilds anzeigt,

b) Auswahl (202) eines Bilds aus der Folge von Bildern, dessen zugeordnete Metrik die beste Qualität in einer Gruppe von Bildern der Folge anzeigt, die noch nicht ausgewählt wurden,

c) für mindestens ein Bild der Folge anders als das ausgewählte Bild, das sich in einer vordefinierten zeitlichen Nachbarschaft des ausgewählten Bilds befindet, Degradierung (204) der dem Bild zugeordneten Metrik,

d) Wiederholung der Schritte b) und c), bis mindestens eine der folgenden Bedingungen erfüllt ist:

- die Anzahl von Durchführungen des Schritts b) hat eine vordefinierte Schwelle erreicht,
- die Metrik jedes Bilds der Folge von Bildern, das noch nicht ausgewählt wurde, hat eine vordefinierte Qualitätsschwelle überschritten.

**6.** Verfahren nach einem der vorhergehenden Ansprüche, dessen Schritte von einer ersten Vorrichtung (1) durchgeführt werden, wobei das Verfahren außerdem einen Schritt enthält

- der Übertragung (114), in einem Kommunikationsnetz (3) und für eine zweite Vorrichtung (2) bestimmt, eines endgültigen Bilds ($I_f$), das vom geänderten Bild stammt, wobei die zweite Vorrichtung (2) konfiguriert ist, an das endgültige Bild die Verarbeitung anzuwenden, um ein die Person betreffendes endgültiges biometrisches Template ($T_f$) zu erzeugen.

**7.** Computerlesbarer Speicher (14), der vom Computer für die Ausführung der Schritte des Verfahrens nach einem der Ansprüche 1 bis 6 ausführbare Anweisungen speichert.

**8.** Vorrichtung (1), die einen Sensor (10), der konfiguriert ist, eine Vielzahl von eine Person zeigenden Bildern zu erfassen, und mindestens einen Prozessor (12) enthält, der konfiguriert ist, die Schritte eines Verfahrens nach einem der Ansprüche 1 bis 6 auszuführen.

**Claims**

**1.** Computer-implemented method for processing images containing biometric data relating to an individual, the method comprising:

- for each image forming part of a plurality of images showing an individual, applying (104) processing to the image so as to produce a biometric template relating to the individual,
- computing (106) an average template (TM) consisting of an average of the produced biometric templates,
- modifying (110) an image ($I_0$) selected from the plurality of images into a modified image ($I_1$), the modification (110) being configured so that an error between the average template (TM) and another biometric template produced by applying the processing to the modified image ($I_1$) is less than an error between the average template (TM) and the biometric template that was produced by applying the processing to the selected image ($I_0$);

the modifying step (110) is iterated as follows:

$$I_{k+1} = I_k - \lambda . D_k$$

where:

- $I_k$ is an image to be modified by an iteration k of the modifying step (110),
- $I_{k+1}$ is a modified image produced by iteration k,
- A is a predefined parameter,
- $D_k = \dfrac{\partial E_k}{\partial I_k}$, where $E_k$ is an error between the average template (TM) and a biometric template produced by applying the processing to image $I_k$.

**2.** Method according to the preceding claim, wherein the selected image ($I_0$) is the image associated with the biometric template closest to the average template (TM).

**3.** Method according to one of the preceding claims, wherein the modifying step (110) is iterated until at least one of the following conditions is met:

- an iteration of the modifying step (110) has produced a final image ($I_f$) such that an error between the average template (TM) and a biometric template produced by applying the processing to the final image ($I_f$) is less than a predefined threshold,
- the number of iterations of the modifying step (110) has reached a predefined threshold.

**4.** Method according to one of the preceding claims, wherein the processing is implemented by a convolutive neural network.

**5.** Method according to one of the preceding claims, further comprising:

- selecting (102) the plurality of images from a sequence of images, the selection being made based on an image-quality criterion and based on a criterion regarding temporal location in the sequence of images,

and the selection step (102) comprises:

a) for each image of the sequence of images, computing (200) an associated metric indicative of a quality of the image,
b) selecting (202) from the sequence of images an image, the associated metric of which indicates the best quality in a set of images of the sequence that have not yet been selected,
c) for at least one image of the sequence other than the selected image, located in a predefined temporal neighbourhood of the selected image, degrading (204) the metric associated with the image,
d) repeating steps b) and c) until at least one of the following conditions is met:

- the number of implementations of step b) has reached a predefined threshold,
- the metric of each image of the sequence of images that has not yet been selected has crossed a predefined quality threshold.

6. Method according to one of the preceding claims, the steps of which are implemented by a first device (1), the method further comprising a step of

- transmitting (114), over a communication network (3) and to a second device (2), a final image ($I_f$) obtained from the modified image, the second device (2) being configured to apply the processing to the final image, so as to produce a final biometric template ($T_f$) relating to the individual.

7. Computer-readable memory (14) storing instructions executable by the computer with a view to execution of the steps of the method according to any one of Claims 1 to 6.

8. Device (1) comprising a sensor (10) configured to acquire a plurality of images showing an individual, and at least one processor (12) configured to execute the steps of a method according to any one of Claims 1 to 6.

Figure 1

Figure 2

102

200

202

204

206

Figure 3

300

$\Rightarrow I_f$

302

$T_f$

304

Figure 4

**RÉFÉRENCES CITÉES DANS LA DESCRIPTION**

**Documents brevets cités dans la description**

- US 2005100200 A1
- US 2014283113 A1
- KR 20160064138 A